# EUROPÄISCHE PATENTANMELDUNG

(11) **EP 3 905 503 A1**
(43) Veröffentlichungstag der Anmeldung: **03.11.2021**
(21) Anmeldenummer: 20172358.2
(22) Anmeldetag: 30.04.2020
(51) Int. Cl.: H02M 5/458, H02M 1/32, H02M 7/219, H02M 7/797

(54) **ENERGIEWANDLER**

(71) Anmelder: Siemens Aktiengesellschaft, 80333 München (DE)
(72) Erfinder: Lange, Robert, 08451 Crimmitschau (DE); Seja, Marco, 09661 Rossau / OT Seifersbach (DE)

(57) **Zusammenfassung**

Die Erfindung betrifft einen Energiewandler (1) zur Energiewandlung (32) von elektrischer Energie in Wärmeenergie, aufweisend einen rückspeisefähigen Gleichrichter (4), eine Spule (11) und einen ersten und zweiten Kondensator (12,13), wobei der rückspeisefähige Gleichrichter (4) mit einem Gleichspannungskreis (5) elektrisch verbunden und mit einem ersten Wechselspannungsnetz (6) elektrisch verbindbar ist, wobei der rückspeisefähige Gleichrichter (4) einen ersten Brückenzweig (7) mit einem ersten und zweiten Leistungshalbleitermodul (8,9) aufweist, wobei das erste und zweite Leistungshalbleitermodul (8,9) in Reihe geschaltet sind und einen ersten Mittelpunktabgriff (10) ausbilden, wobei das erste Leistungshalbleitermodul (8) mit einer ersten Gleichspannungsphase (15) und das zweite Leistungshalbleitermodul (9) mit einer zweiten Gleichspannungsphase (16) des Gleichspannungskreises (3) elektrisch verbunden ist, wobei der erste und der zweite Kondensator (12,13) in Reihe geschaltet sind und einen zweiten Mittelpunktabgriff (14) ausbilden, wobei der erste Kondensator (12) mit der ersten Gleichspannungsphase (15) und der zweite Kondensator (13) mit der zweiten Gleichspannungsphase (16) des Gleichspannungskreises (5) elektrisch verbunden ist und wobei die Spule (11) zwischen dem ersten Mittelpunktabgriff (10) und dem zweiten Mittelpunktabgriff (14) elektrisch verbunden ist. Ferner betrifft die Erfindung einen Umrichter (10) mit dem Energiewandler (1) und ein Verfahren (33) des Energiewandlers (1).

## Beschreibung

Die Erfindung betrifft einen Energiewandler zur Energiewandlung elektrischer Energie in Wärmeenergie, welcher einen rückspeisefähigen Gleichrichter, eine Spule und einen ersten und zweiten Kondensator aufweist, wobei der rückspeisefähige Gleichrichter mit einem Gleichspannungskreis elektrisch verbunden und mit einem ersten Wechselspannungsnetz elektrisch verbindbar ist. Die Erfindung betrifft weiterhin einen Umrichter mit dem Energiewandler und ein Verfahren des Energiewandlers.

In der elektrischen Antriebstechnik kommen oftmals elektrische Umrichter zum Einsatz, wobei diese Umrichter oftmals einen Gleichrichter aufweisen, welcher die elektrische Energie aus einem Wechselspannungsnetz als Versorgungsnetz in einen Gleichspannungskreis (auch z.B. bei Frequenzumrichtern als Gleichspannungszwischenkreis bekannt) wandelt. Der Gleichspannungskreis kennzeichnet hier auch ein ggf. komplexer ausgelegtes Gleichspannungsnetz. An dem Gleichspannungskreis kann z.B. eine (rotierende) elektrische Gleichspannungsmaschine betrieben werden.

Mittels einer weiteren Wandlung der elektrischen Energie von dem Gleichspannungskreis in ein weiteres Wechselspannungsnetz mittels eines Wechselrichters (z.B. bei in einem Frequenzumrichter) ist eine (rotierende) elektrische Wechselspannungsmaschine an dem weiteren Wechselspannungsnetz betreibbar.

Ist die jeweilige elektrische Maschine eher für kleinere Leistungen ausgelegt und ist das Wechselspannungsnetz beispielsweise zweiphasig mit den Phasen L1 und N ausgebildet, kommt auch aus Kostengründen häufig ein ungesteuerter Gleichrichter zum Einsatz. Dieses zweiphasig ausgebildete Wechselspannungsnetz ist auch als einphasiges Wechselspannungsnetz bekannt (mit L1 als Phase, an der eine Spannung gegenüber N anliegt).

Dieser ungesteuerte Gleichrichter ist nicht in der Lage, elektrische Energie aus dem Gleichspannungskreis, z.B. bei einem generatorischen Betrieb bzw. während eines Bremsvorgangs der jeweiligen elektrischen Maschine, in das Wechselspannungsnetz zurückzuspeisen.

Da dann am Gleichspannungskreis eine unerwünscht hohe elektrische Energie anliegen kann, welche sich durch eine hohe Spannung und einen hohen Stromfluss kennzeichnet und die elektrischen Bauelemente am Gleichspannungskreis zerstören kann, ist die elektrische Energie z.B. mittels eines auch als Bremswiderstand bekannten ohmschen Widerstands in Wärmeenergie umwandelbar.

Da der Bremswiderstand im Allgemeinen auch nur für eine begrenzte Wandlung der elektrischen Energie in Wärmeenergie ausgelegt ist, wird ihm oftmals noch ein Leistungshalbleiterschalter vorgeschaltet. Dieser Leistungshalbleiterschalter (auch bekannt als Leistungshalbleiter-Chopper) lässt einen definierten Stromfluss zu, so dass eine übermäßige ggf. zerstörerische Erwärmung des Bremswiderstands verhindert wird.

Diese technische Lösung, bestehend aus Bremswiderstand (Leistungswiderstand) und ggf. steuerbaren Leistungshalbleiter-Chopper, ist jedoch meist sehr kostenintensiv und für die beschriebene Einsatzbedingungen z.T. aufwändig betreibbar.

Im Zuge einer bewusst effizienten und verbrauchsoptimierten Nutzung von elektrischer Energie ist nunmehr oftmals auch bei Antriebssystemen kleinerer Leistung an eine Rückspeisung der beispielsweise beim Bremsvorgang erzeugbaren elektrischen Energie aus dem Gleichspannungskreis in das Wechselspannungsnetz als Versorgungsnetz vorgesehen. Dies ist mit einem gesteuerten, rückspeisefähigen Gleichrichter grundsätzlich möglich.

Jedoch kann nicht immer sichergestellt werden, dass das Versorgungsnetz jederzeit die Kapazität bzw. grundsätzlich die Fähigkeit hat, die elektrische Energie aus dem Gleichspannungskreis sicher aufzunehmen. Hat z.B. die Sicherung zum Schutz des Umrichters bzw. des Gleichrichters im Versorgungsnetz ausgelöst, ist schon aus diesem Grund eine Rückspeisung der elektrischen Energie in das Versorgungsnetz nicht mehr möglich.

Die obigen Überlegungen für das Antriebssystem gelten im Wesentlichen auch für ein Energieversorgungs- bzw. Energieübertagungssystem. Hier besteht meist ebenfalls die Notwendigkeit einer Umwandlung von in dem Gleichspannungskreis vorhandener überschüssiger elektrischer Energie in Wärmeenergie oder einer Rückspeisung der überschüssigen elektrischer Energie in das Versorgungsnetz mit den beschriebenen Konsequenzen bzw. Problemen beim Antriebssystem.

Der Erfindung liegt daher die Aufgabe zugrunde, einen gegenüber dem Stand der Technik verbesserten Energiewandler sowie einen Umrichter und ein Verfahren des Energiewandler vorzuschlagen, mittels denen elektrische Energie effizient und sicher in Wärmeenergie umwandelbar ist.

Die Aufgabe wird durch einen Energiewandler mit den in Anspruch 1 angegebenen Merkmalen, durch einen Umrichter mit dem Energiewandler nach den in Anspruch 9 angegebenen Merkmalen sowie durch ein Verfahren des Energiewandlers nach den in Anspruch 12 angegebenen Merkmalen gelöst.

Für die Lösung der Aufgabe wird ein Energiewandler zur Energiewandlung elektrischer Energie in Wärmeenergie vorgeschlagen, welcher einen rückspeisefähigen Gleichrichter, eine Spule und einen ersten und zweiten Kondensator aufweist, wobei der rückspeisefähige Gleichrichter mit einem Gleichspannungskreis elektrisch verbunden und mit einem ersten Wechselspannungsnetz elektrisch verbindbar ist, wobei der rückspeisefähige Gleichrichter einen ersten Brückenzweig mit einem ersten und zweiten Leistungshalbleitermodul aufweist, wobei das erste und zweite Leistungshalbleitermodul in Reihe geschaltet sind und einen ersten Mittelpunktabgriff ausbilden, wobei das erste Leistungshalbleitermodul mit einer ersten Gleichspannungsphase und das zweite Leistungshalbleitermodul mit einer zweiten Gleichspannungsphase des Gleichspannungskreises elektrisch verbunden ist, wobei der erste und der zweite Kondensator in Reihe geschaltet sind und einen zweiten Mittelpunktabgriff ausbilden, wobei der erste Kondensator mit der ersten Gleichspannungsphase und der zweite Kondensator mit der zweiten Gleichspannungsphase des Gleichspannungskreises elektrisch verbunden ist und wobei die Spule zwischen dem ersten Mittelpunktabgriff und dem zweiten Mittelpunktabgriff elektrisch verbunden ist.

Über die beiden Leistungshalbleitermodule kann, entgegen bisherigen Lösungen, welche z.B. einen kostenintensiven und vergleichsweise aufwändig betreibbaren Bremswiderstand mit ggf. vorgeschalteten Leistungshalbleiter-Chopper erfordern, in vorteilhafter Weise effizient und mittels der Spule und den beiden Kondensatoren aufwandsarm betreibbar, elektrische Energie aus dem Gleichspannungskreis entladen werden.

Dazu ist die am Gleichspannungskreis anstehende überschüssige elektrische Energie, welche die beiden Kondensatoren aufgrund ihrer ausgelegten elektrischen Kapazität nicht mehr aufnehmen können, von der Spule in Wärmeenergie umwandelbar.

Im Vergleich zu z.B. einem Frequenzumrichter mit einem rückspeisefähigen Gleichrichter, welcher gemeinsam mit Gleichspannungszwischenkreiskondensatoren, hier vergleichbar mit dem ersten und zweiten Kondensator, am Gleichspannungszwischenkreis, hier vergleichbar am Gleichspannungskreis, betreibbar ist, wird zusätzlich die Spule als verlustbehaftete Induktivität zwischen den ersten und zweiten Mittelpunktabgriff angeordnet.

Eine verlustbehaftete Induktivität bedeutet in diesem Zusammenhang, dass die Spule bewusst hohe elektrische Verluste bei der Energiewandlung, also dem Abbau der überschüssigen elektrischen Energie des Gleichspannungskreises mittels Umwandlung der elektrischen Energie in Wärmeenergie bei einem Stromfluss durch die Spule zum ersten oder zweiten Kondensator verursachen soll.

Der rückspeisefähige Gleichrichter ist dabei grundsätzlich vorgesehen, mittels einer Verbindung mit dem ersten Wechselspannungsnetz, sowohl elektrische Energie in den Gleichspannungskreis einzuspeisen, und so elektrische Verbraucher über den Gleichspannungskreis entsprechend zu betreiben, wie auch elektrische Energie, erzeugbar von entsprechenden elektrischen Energieerzeugern (z.B. via Solarpanels, Akkumulatoren, Generatoren oder bei Bremsen generatorisch betreibbare Motoren) von dem Gleichspannungskreis in das erste Wechselspannungsnetz zurück zu speisen.

Vorteilhafte Ausgestaltungsformen des Energiewandlers sind in den abhängigen Ansprüchen angegeben.

Bei einer ersten vorteilhaften Ausgestaltungsform des Energiewandlers ist an der Spule eine metallische Vorrichtung angeordnet und ist mittels der Spule elektrische Energie in die metallische Vorrichtung induzierbar und in Wärmeenergie umwandelbar.

Der technische Effekt, der sich durch die Spule bei der Energiewandlung von elektrischer Energie in Wärmeenergie einstellt, wird vorteilhaft verstärkt, indem die elektrische Energie von der Spule in die metallische Vorrichtung induziert und auch dort oder im Wesentlichen dort Verlustwärme mittels des Wirbelstromprinzips erzeugt.

Dazu kann die metallische Vorrichtung in vorteilhafter Weise aus einem ferromagnetischen Material bestehen, welches einen spezifischen elektrischen Widerstand p (Roh) in einem Bereich von 0,1-1 Q*mm²/m aufweist und charakteristisch für Eisen und Edelstahl ist.

Mittels der abwechselnd betreibbaren beiden Leistungshalbleitermodule kann eine sich ändernde Stromrichtung des Stromflusses durch die Spule erzeugt werden, was ein zeitlich sich änderndes magnetisches Feld in der metallischen Vorrichtung hervorrufen kann und wiederum einen Wirbelstromfluss erzeugbar macht, wodurch dann die Wandlung der elektrische Energie in Wärmeenergie erfolgt.

Die metallische Vorrichtung kann auch als Gehäuse beispielsweise des Gleichrichters oder eines Umrichters ausgebildet sein, in welches die elektrische Energie induzierbar ist.

Ferner kann die metallische Vorrichtung einen Kühlkörper aufweisen, welcher die bei der Energiewandlung erzeugte Wärme aufnimmt und an die Umgebung ableitet.

Bei einer weiteren vorteilhaften Ausgestaltungsform des Energiewandlers weist der rückspeisfähige Gleichrichter einen zweiten Brückenzweig mit einem in Reihe geschalteten dritten und vierten Leistungshalbleitermodul, bildet das dritte und vierte Leistungshalbleitermodul einen dritten Mittelpunktabgriff aus, ist der erste Mittelpunktabgriff mit einer ersten Wechselspannungsphase und der dritte Mittelpunktabgriff mit einer zweiten Wechselspannungsphase des ersten Wechselspannungsnetzes verbindbar und ist das dritte Leistungshalbleitermodul mit der ersten Gleichspannungsphase und das vierte Leistungshalbleitermodul mit der zweiten Gleichspannungsphase des Gleichspannungskreises elektrisch verbunden.

Bei einer weiteren vorteilhaften Ausgestaltungsform des Energiewandlers sind das erste und zweite Leistungshalbleitermodul und, soweit vorhanden, das dritte und das vierte Leistungshalbleitermodul jeweils als Leistungshalbleiterschalter mit oder ohne einer antiparallel geschalteten Freilaufdiode ausgebildet und sind die Leistungshalbleiterschalter jeweils über Ansteuersignale einer Steuereinrichtung ansteuerbar.

Die Leistungshalbleiterschalter können vorteilhaft als Insulated Gate Bipolar Transistor (IGBT) oder Metal Oxide Semiconductor Field-Effect Transistor (MOSFET) ausgebildet sein.

Zur Unterstützung der Kommutierung bei der Stromübergabe zwischen dem ersten und zweiten Leistungshalbleitermodul sowie zwischen dem dritten und viertem Leistungshalbleitermodul sind die zu den entsprechenden Leistungshalbleiterschaltern der Leistungshalbleitermodule antiparallel geschalteten Freilaufdiode von Vorteil.

Bei einer weiteren vorteilhaften Ausgestaltungsform des Energiewandlers sind die Leistungshalbleiterschalter des ersten und zweiten Leistungshalbleitermoduls für die Energiewandlung mit einer Taktfrequenz ab 40 kHz betreibbar.

Die Leistungshalbleiterschalter des ersten und zweiten Leistungshalbleitermoduls können SiC oder GaN aufweisen, wobei diese Leistungshalbleiterschalter dann besonders vorteilhaft für hohe Taktfrequenzen ab 40 kHz geeignet ist.

Die Taktung der Leistungshalbleiterschalter des ersten und zweiten Leistungshalbleitermoduls mit einer Taktfrequenzen ab 40 kHz hat den vorteilhaften Effekt, dass in diesen Leistungshalbleiterschaltern mittels der elektrischen Schaltverluste zumindest ein Teil der im Gleichspannungskreis anstehenden elektrischen Energie während der Energiewandlung in Verlustwäre umwandelbar ist.

Auch trägt die hohe Taktfrequenz ab 40 kHz dazu bei, dass die Energiewandlung von elektrischer Energie in Wärmeenergie mittels der Spule und, falls vorhanden, in Kombination mit der metallischen Vorrichtung weiter verstärkt werden kann.

Im Betrieb der gattungsgemäßen Energieübertragung des rückspeisefähigen Gleichrichters, also im Wesentlichen ohne die Energiewandlung, wird im Allgemeinen eine kleinere Taktfrequenz gewählt, was die dann eher unerwünschten Schaltverluste reduzierbar macht.

Bei einer weiteren vorteilhaften Ausgestaltungsform des Energiewandlers ist die Steuereinrichtung ausgebildet, die jeweiligen Leistungshalbleiterschalter des dritten und vierten Leistungshalbleitermoduls bei der Energiewandlung mittels der jeweiligen Ansteuersignale der Steuereinrichtung für einen Sperrbetrieb, insbesondere auf Basis einer Netzüberwachung des ersten Wechselspannungsnetzes, zu sperren.

Um beispielweise bei einem Netzausfall des ersten Wechselspannungsnetzes oder einer gefallenen Sicherung in einer der Wechselspannungsphasen des ersten Wechselspannungsnetzes einen sicheren getrennten Zustand herzustellen, werden jeweils die Leistungshalbleiterschalter des dritten und vierten Leistungshalbleitermoduls gesperrt, so dass kein Strom durch diese Leistungshalbleiterschalter fließen kann.

Die Netzüberwachung erkennt dabei den Zustand des ersten Wechselspannungsnetzes, so z.B. den Netzausfall, den Fall der Sicherung aber auch, ob das erste Wechselspannungsnetz elektrisch in der Lage ist, die von dem Gleichspannungskreis zur Einspeisung in das erste Wechselspannungsnetz bereitstellbare elektrische Energie aufzunehmen.

Bei einer weiteren vorteilhaften Ausgestaltungsform des Energiewandlers ist die Steuereinrichtung ausgebildet, die jeweiligen Leistungshalbleiterschalter des ersten, zweiten, dritten und vierten Leistungshalbleitermoduls mittels der jeweiligen Ansteuersignale der Steuereinrichtung derart zu schalten, dass für einen Kombinationsbetrieb gleichzeitig die Energiewandlung und eine Energierückspeisung von elektrischer Energie aus dem Gleichspannungskreis in das erste Wechselspannungsnetz, insbesondere auf Basis einer Netzüberwachung des ersten Wechselspannungsnetzes, durchgeführt wird.

Dieser Kombinationsbetrieb vereint in vorteilhafter Weise die Energierückspeisung aus dem Gleichspannungskreis in das erste Wechselspannungsnetz bei gleichzeitiger Energiewandlung. Somit kann die elektrische Energie, welche zurückgespeist werden soll, z.B. dosiert zurückgespeist werden, also die Höhe der Energierückspeisung gleichzeitig durch die Energiewandlung begrenzt werden.

Gleichzeitig bedeutet demnach, dass im Kombinationsbetrieb die Energiewandlung parallel zur Energierückspeisung durchführbar ist.

Die Netzüberwachung erkennt dabei den Zustand des ersten Wechselspannungsnetzes derart, ob das erste Wechselspannungsnetz elektrisch in der Lage ist, die von dem Gleichspannungskreis zur Einspeisung in das erste Wechselspannungsnetz bereitstellbare elektrische Energie in der notwendigen Höhe über einen bestimmten Zeitbereich aufzunehmen.

Ist dies nicht der Fall, kann die Energiewandlung vorteilhaft zeitgleich zur Energierückspeisung durch die Steuereinrichtung auf Basis der Netzüberwachung aktiviert werden und z.B. die Taktfrequenz der Leistungshalbleiterschalter des ersten und zweiten Leistungshalbleitermoduls erhöht werden, insbesondere auf eine Taktfrequenz ab 40 kHz.

Bei einer weiteren vorteilhaften Ausgestaltungsform des Energiewandlers ist die Netzüberwachung ausgebildet, charakteristische elektrische Werte des ersten Wechselspannungsnetzes, insbesondere Spannung und/oder Strom und/oder elektrische Leistung und/oder Frequenz, für die Netzüberwachung mittels einer Erfassungsvorrichtung zu erfassen.

Die charakteristischen elektrischen Werte des erste Wechselspannungsnetzes, welche durch die Erfassungsvorrichtung erfasst werden, beschreiben demnach den elektrischen Zustand des erste Wechselspannungsnetzes, so z.B. ob die Spannung auf einen unzulässigen Wert abgesunken ist, kein Stromfluss mehr zustande kommt oder die Frequenz unzulässige Werte angenommen hat. Diese elektrischen Informationen fließen in die Bewertung des Zustandes des ersten Wechselspannungsnetzes durch die Netzüberwachung ein, auf dessen Basis der Sperrbetrieb oder der Kombinationsbetrieb veranlasst wird.

Die Erfassung der charakteristischen elektrischen Werte des erste Wechselspannungsnetzes durch die Erfassungsvorrichtung können, soweit technisch möglich, gemessen, berechnet oder in einer Kombination aus Messung und Berechnung ermittelt werden. Dies kann ausschließlich durch die Erfassungsvorrichtung aber auch durch die Erfassungsvorrichtung in Verbindung mit der Steuereinrichtung erfolgen.

Für die Lösung der Aufgabe wird ebenfalls ein Umrichter mit dem erfindungsgemäßen Energiewandler vorgeschlagen.

Der Umrichter ist in vorteilhafter Weise mit dem Energiewandler betreibbar und sowohl im Bereich der elektrischen Antriebstechnik wie auch der elektrischen Energieerzeugung und Energieverteilung einsetzbar.

Bei einer ersten vorteilhaften Ausgestaltungsform des Umrichters weist der Umrichter einen Wechselrichter auf, wobei der Wechselrichter mittels der ersten und der zweiten Gleichspannungsphase des Gleichspannungskreises mit dem rückspeisefähigen Gleichrichter elektrisch verbunden ist.

Bei einer weiteren vorteilhaften Ausgestaltungsform des Umrichters der Wechselrichter ist der Wechselrichter mittels eines zweiten Wechselspannungsnetzes mit einer elektrischen Maschine elektrisch verbindbar.

Für die Lösung der Aufgabe wird weiterhin ein Verfahren des erfindungsgemäßen Energiewandlers vorgeschlagen, wobei mittels der über die jeweiligen Ansteuersignale der Steuereinrichtung angesteuerten Leistungshalbleiterschalter des ersten und zweiten Leistungshalbleitermoduls, der Spule und des ersten und zweiten Kondensators elektrische Energie bei der Energiewandlung in Wärmeenergie umgewandelt wird.

Bei einer ersten vorteilhaften Ausgestaltungsform des Verfahrens werden die Leistungshalbleiterschalter des ersten und zweiten Leistungshalbleitermoduls bei der Energiewandlung mit einer Taktfrequenz ab 40 kHz betrieben.

Bei einer weiteren vorteilhaften Ausgestaltungsform des Verfahrens sperrt die Steuereinrichtung die jeweiligen Leistungshalbleiterschalter des dritten und vierten Leistungshalbleitermoduls bei der Energiewandlung im Sperrbetrieb mittels der jeweiligen Ansteuersignale der Steuereinrichtung insbesondere auf Basis einer Netzüberwachung des ersten Wechselspannungsnetzes.

Bei einer weiteren vorteilhaften Ausgestaltungsform des Verfahrens wird der rückspeisefähige Gleichrichter mit dem ersten Wechselspannungsnetz elektrisch verbunden und steuert die Steuereinrichtung die jeweiligen Leistungshalbleiterschalter des ersten, zweiten, dritten und vierten Leistungshalbleitermoduls mittels der jeweiligen Ansteuersignale derart an, dass im Kombinationsbetrieb gleichzeitig die Energiewandlung und die Energierückspeisung elektrischer Energie aus dem Gleichspannungskreis in das erste Wechselspannungsnetz, insbesondere auf Basis einer Netzüberwachung des ersten Wechselspannungsnetzes, durchgeführt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine erste schematische Darstellung eines erfindungsgemäßen Energiewandlers sowie einen Umrichter mit dem Energiewandler,
- FIG 2: ein erstes Struktogramm eines Verfahrens des Energiewandlers nach FIG 1,
- FIG 3: ein zweites Struktogramm ein Ausführungsbeispiel zum Verfahren nach FIG 2 des Energiewandlers nach FIG 1 und
- FIG 4: ein drittes Struktogramm ein weiteres Ausführungsbeispiel zum Verfahren nach FIG 2 des Energiewandlers nach FIG 1.

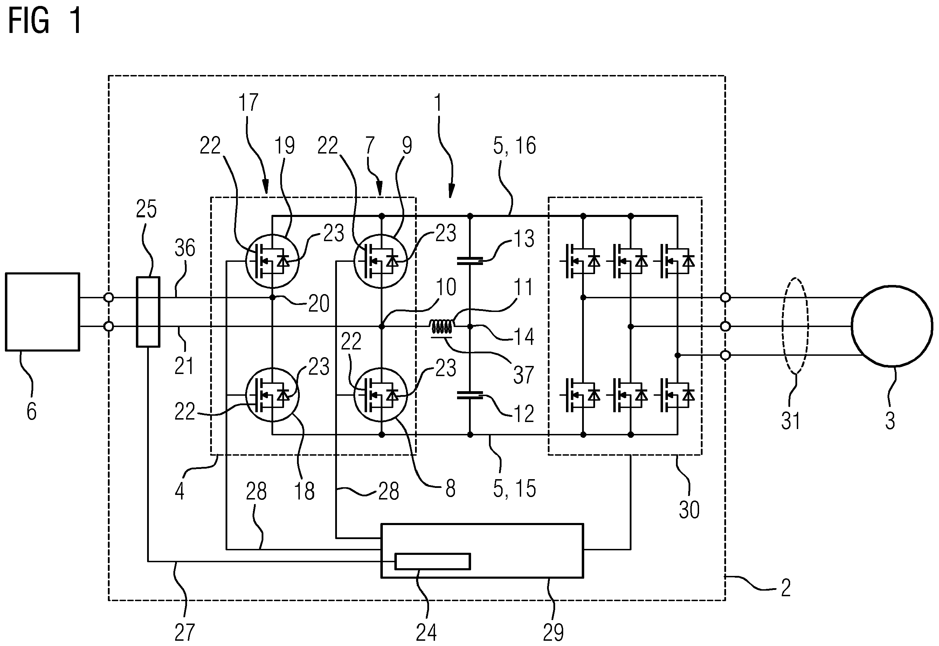

Die FIG 1 zeigt eine erste schematische Darstellung eines erfindungsgemäßen Energiewandlers 1 zur Energiewandlung von elektrischer Energie in Wärmeenergie sowie einen Umrichter 2 mit dem Energiewandler 1.

Der Energiewandler 1 weist einen rückspeisefähigen Gleichrichter 4, eine Spule 11 und einen ersten und zweiten Kondensator 12,13 auf.

Der der rückspeisefähige Gleichrichter 4 ist mit einem Gleichspannungskreis 5 und mit einem ersten Wechselspannungsnetz 6 elektrisch verbunden und umfasst einen ersten Brückenzweig 7 mit einem in Reihe geschalteten ersten und zweiten Leistungshalbleitermodul 8,9 und einen zweiten Brückenzweig 17 mit einem in Reihe geschalteten dritten und vierten Leistungshalbleitermodul 18,19.

Das erste und zweite Leistungshalbleitermodul 8,9 bilden einen ersten Mittelpunktabgriff 10 aus, wobei das erste Leistungshalbleitermodul 8 mit einer ersten Gleichspannungsphase 15 und das zweite Leistungshalbleitermodul 9 mit einer zweiten Gleichspannungsphase 16 des Gleichspannungskreises 3 elektrisch verbunden ist.

Das dritte und vierte Leistungshalbleitermodul bilden einen dritten Mittelpunktabgriff 20 aus, wobei das dritte Leistungshalbleitermodul 18 mit der ersten Gleichspannungsphase 15 und das vierte Leistungshalbleitermodul 19 mit der zweiten Gleichspannungsphase 16 des Gleichspannungskreises 3 elektrisch verbunden ist.

Der erste und der zweite Kondensator 12,13 sind in Reihe geschaltet sind und bilden einen zweiten Mittelpunktabgriff 14 aus, wobei der erste Kondensator 12 mit der ersten Gleichspannungsphase 15 und der zweite Kondensator 13 mit der zweiten Gleichspannungsphase 16 des Gleichspannungskreises 5 elektrisch verbunden ist.

Die Spule 11 ist zwischen dem ersten Mittelpunktabgriff 10 und dem zweiten Mittelpunktabgriff 14 elektrisch verbunden.

Der erste Mittelpunktabgriff 10 ist mit einer ersten Wechselspannungsphase 21 und der dritte Mittelpunktabgriff 20 mit einer zweiten Wechselspannungsphase 36 des ersten Wechselspannungsnetzes 6 verbunden.

An der Spule 11 ist eine metallische Vorrichtung 37 angeordnet, so dass bei der Energiewandlung mittels der Spule 11 elektrische Energie in die metallische Vorrichtung 37 induziert und in Wärmeenergie umgewandelt werden kann.

Das erste und zweite Leistungshalbleitermodul 8,9 und das dritte und das vierte Leistungshalbleitermodul 18,19 weisen jeweils einen Leistungshalbleiterschalter 22 mit einer antiparallel geschalteten Freilaufdiode 2 auf, wobei die Leistungshalbleitermodule 8,9,18,19 über Ansteuersignale 28 einer Steuereinrichtung 29 ansteuert werden.

Die Steuereinrichtung 29 des Energiewandlers 1 umfasst eine Netzüberwachung 34. Von der Erfassungsvorrichtung 25 können charakteristische elektrische Werte des ersten Wechselspannungsnetzes 6, wie Spannung und/oder Strom und/oder elektrische Leistung und/oder Frequenz erfasst und mittels eine Signalleitung 27 an die Netzüberwachung 34 übermittelt werden.

Die Leistungshalbleiterschalter 22 des ersten und zweiten Leistungshalbleitermoduls 8,9 sind für die Energiewandlung mit einer Taktfrequenz ab 40 kHz betreibbar.

In der FIG 1 umfasst der Umrichter 2 neben dem Energiewandler 1 noch einen Wechselrichter 30, wobei der Wechselrichter 30 mittels der ersten und der zweiten Gleichspannungsphase 15,16 des Gleichspannungskreises 5 mit dem rückspeisefähigen Gleichrichter 4 elektrisch verbunden ist.

Der Wechselrichter 30 ist mittels eines zweiten Wechselspannungsnetzes 31 mit einer elektrischen Maschine 3 elektrisch verbunden. Somit kann die elektrische Maschine 3 mittels des Umrichters 2 und des zweiten Wechselspannungsnetzes 31 an dem ersten Wechselspannungsnetz 6 betrieben werden.

Im Anwendungsbeispiel der FIG 1 ist der Wechselrichter als B6-Brückenschaltung jeweils mit Leistungshalbleiterschaltern und zu den Leistungshalbleiterschaltern jeweils antiparallel geschalteten Freilaufdioden ausgebildet, welche mittels der Steuereinrichtung 29 über eine weitere Ansteuerleitung ansteuerbar sind.

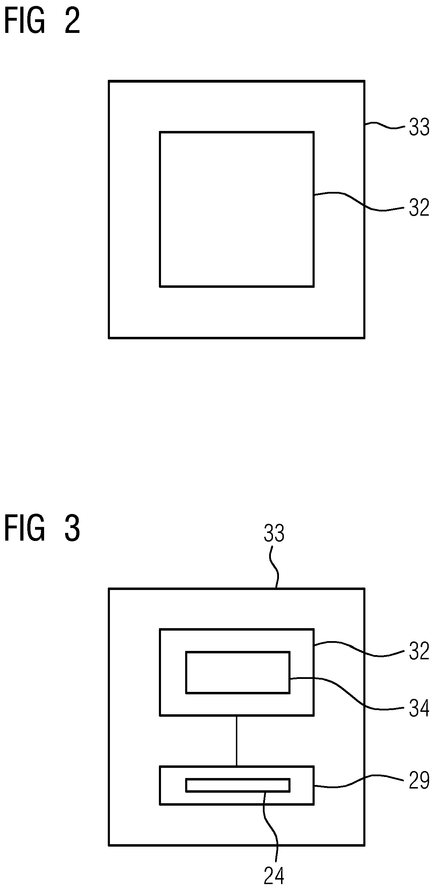

Die FIG 2 zeigt ein erstes Struktogramm eines Verfahrens 33 des Energiewandlers 1 nach FIG 1.

Mittels der über die jeweiligen Ansteuersignale der Steuereinrichtung angesteuerten Leistungshalbleiterschalter des ersten und zweiten Leistungshalbleitermoduls, der Spule und des ersten und zweiten Kondensators wird bei der Energiewandlung 32 elektrische Energie aus dem Gleichspannungskreis in Wärmeenergie umgewandelt.

Die Leistungshalbleiterschalter des ersten und zweiten Leistungshalbleitermoduls sind für die Energiewandlung 32 mit einer Taktfrequenz ab 40 kHz betreibbar.

In der FIG 3 ist in einem zweiten Struktogramm ein Ausführungsbeispiel zum Verfahren 33 nach FIG 2 des Energiewandlers 1 nach FIG 1 dargestellt.

Zur Durchführung des Ausführungsbeispiels kann der rückspeisefähige Gleichrichter mit dem ersten Wechselspannungsnetz elektrisch verbunden sein.

Die Steuereinrichtung 29 sperrt bei der Energiewandlung 32 im Sperrbetrieb 34, insbesondere auf Basis einer Netzüberwachung 24 des ersten Wechselspannungsnetzes, die jeweiligen Leistungshalbleiterschalter des dritten und vierten Leistungshalbleitermoduls mittels der jeweiligen Ansteuersignale der Steuereinrichtung 29.

Dies geschieht beispielweise bei einem Netzausfall des ersten Wechselspannungsnetzes, so dass kein Strom durch diese Leistungshalbleiterschalter fließt und ein sicherer elektrischer Zustand des Gleichrichters gegenüber dem ersten Wechselspannungsnetz für die Durchführung des Verfahrens 33 der Energiewandlung 32 hergestellt wird.

Die Netzüberwachung 24 erkennt dabei für den Sperrbetrieb 34 den Zustand des beispielhaft gewählten Netzausfalls im ersten Wechselspannungsnetz und die Steuereinrichtung 29 benutzt diese Information, um die Leistungshalbleiterschalter des dritten und vierten Leistungshalbleitermoduls zu sperren.

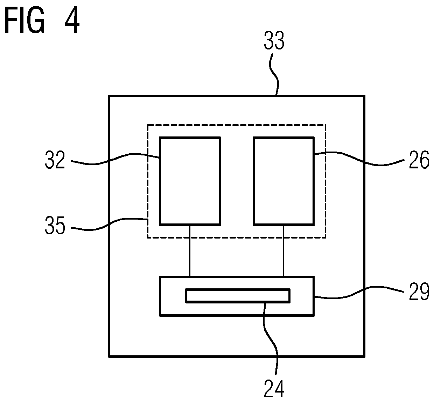

Mit der FIG 4 wird in einem dritten Struktogramm ein weiteres Ausführungsbeispiel zum Verfahren 33 nach FIG 2 des Energiewandlers 1 nach FIG 1 aufgezeigt.

Zur Durchführung des weiteren Ausführungsbeispiels ist der rückspeisefähige Gleichrichter mit dem ersten Wechselspannungsnetz elektrisch verbunden.

Die Steuereinrichtung 29 steuert die jeweiligen Leistungshalbleiterschalter des ersten, zweiten, dritten und vierten Leistungshalbleitermoduls mittels der jeweiligen Ansteuersignale, insbesondere auf Basis einer Netzüberwachung 24 des ersten Wechselspannungsnetzes derart an, dass im Kombinationsbetrieb 35 gleichzeitig die Energiewandlung 32 und die Energierückspeisung 26 elektrischer Energie aus dem Gleichspannungskreis in das erste Wechselspannungsnetz durchgeführt wird.

Dazu können die Leistungshalbleiterschalter des ersten und zweiten Leistungshalbleitermoduls bei der Energiewandlung 32 mit einer Taktfrequenz ab 40 kHz betrieben werden.

Im Kombinationsbetrieb 35 wird eine Energierückspeisung 26 aus dem Gleichspannungskreis in das erste Wechselspannungsnetz bei gleichzeitiger Energiewandlung 32 durchgeführt. Die elektrische Energie, welche zurückgespeist werden soll, ist regulierbar, demnach kann die Höhe der Energierückspeisung 26 durch die gleichzeitig durchgeführte Energiewandlung 32 begrenzt werden.

Gleichzeitig bedeutet demnach, dass im Kombinationsbetrieb 35 die Energiewandlung 32 parallel zur Energierückspeisung 26 durchführbar ist.

Die Netzüberwachung 24 erkennt dabei für den Kombinationsbetrieb 35 den Zustand des ersten Wechselspannungsnetzes zumindest insofern, ob das erste Wechselspannungsnetz elektrisch in der Lage ist, die von dem Gleichspannungskreis zur Einspeisung in das erste Wechselspannungsnetz bereitstellbare elektrische Energie in der notwendigen Höhe über einen bestimmten Zeitbereich aufzunehmen.

## Patentansprüche

1. Energiewandler (1) zur Energiewandlung (32) von elektrischer Energie in Wärmeenergie, aufweisend
- einen rückspeisefähigen Gleichrichter (4),
- eine Spule (11) und
- einen ersten und zweiten Kondensator (12,13),
wobei
- der rückspeisefähige Gleichrichter (4) mit einem Gleichspannungskreis (5) elektrisch verbunden und mit einem ersten Wechselspannungsnetz (6) elektrisch verbindbar ist,
- der rückspeisefähige Gleichrichter (4) einen ersten Brückenzweig (7) mit einem ersten und zweiten Leistungshalbleitermodul (8,9) aufweist,
- das erste und zweite Leistungshalbleitermodul (8,9) in Reihe geschaltet sind und einen ersten Mittelpunktabgriff (10) ausbilden,
- das erste Leistungshalbleitermodul (8) mit einer ersten Gleichspannungsphase (15) und das zweite Leistungshalbleitermodul (9) mit einer zweiten Gleichspannungsphase (16) des Gleichspannungskreises (5) elektrisch verbunden ist,
- der erste und der zweite Kondensator (12,13) in Reihe geschaltet sind und einen zweiten Mittelpunktabgriff (14) ausbilden,
- der erste Kondensator (12) mit der ersten Gleichspannungsphase (15) und der zweite Kondensator (13) mit der zweiten Gleichspannungsphase (16) des Gleichspannungskreises (5) elektrisch verbunden ist und
- die Spule (11) zwischen dem ersten Mittelpunktabgriff (10) und dem zweiten Mittelpunktabgriff (14) elektrisch verbunden ist.

2. Energiewandler (1) nach Anspruch 1, wobei an der Spule (11) eine metallische Vorrichtung (37) angeordnet ist und wobei mittels der Spule (11) elektrische Energie in die metallische Vorrichtung (37) induzierbar und in Wärmeenergie umwandelbar ist.

3. Energiewandler (1) nach einem der Ansprüche 1 oder 2, wobei
- der rückspeisfähige Gleichrichter (4) einen zweiten Brückenzweig (17) mit einem in Reihe geschalteten dritten und vierten Leistungshalbleitermodul (18,19) aufweist, wobei
- das dritte und vierte Leistungshalbleitermodul (18,19) einen dritten Mittelpunktabgriff (20) ausbilden,
- der erste Mittelpunktabgriff (10) mit einer ersten Wechselspannungsphase (21) und der dritte Mittelpunktabgriff (20) mit einer zweiten Wechselspannungsphase (36) des ersten Wechselspannungsnetzes (6) verbindbar ist und
- das dritte Leistungshalbleitermodul (18) mit der ersten Gleichspannungsphase (15) und das vierte Leistungshalbleitermodul (19) mit der zweiten Gleichspannungsphase (16) des Gleichspannungskreises (5) elektrisch verbunden ist.

4. Energiewandler (1) nach einem der vorhergehenden Ansprüche, wobei das erste und zweite Leistungshalbleitermodul (8,9) und, soweit vorhanden, das dritte und das vierte Leistungshalbleitermodul (18,19) jeweils als Leistungshalbleiterschalter (22) mit oder ohne einer antiparallel geschalteten Freilaufdiode (23) ausgebildet sind und wobei die Leistungshalbleitermodule (8,9,18,19) jeweils über Ansteuersignale (28) einer Steuereinrichtung (29) ansteuerbar sind.

5. Energiewandler (1) nach Anspruch 4, wobei die Leistungshalbleiterschalter (22) des ersten und zweiten Leistungshalbleitermoduls (8,9) für die Energiewandlung (32) mit einer Taktfrequenz ab 40 kHz betreibbar sind.

6. Energiewandler (1) nach einem der Ansprüche 4 oder 5, wobei die Steuereinrichtung (29) ausgebildet ist, die jeweiligen Leistungshalbleiterschalter (22) des dritten und vierten Leistungshalbleitermoduls (18,19) bei der Energiewandlung (32) mittels der jeweiligen Ansteuersignale (28) der Steuereinrichtung (29) für einen Sperrbetrieb (34), insbesondere auf Basis einer Netzüberwachung (24) des ersten Wechselspannungsnetzes (6), zu sperren.

7. Energiewandler (1) nach Anspruch 4 oder 5, wobei die Steuereinrichtung (29) ausgebildet ist, die jeweiligen Leistungshalbleiterschalter (22) des ersten, zweiten, dritten und vierten Leistungshalbleitermoduls (8,9,18,19) mittels der jeweiligen Ansteuersignale (28) der Steuereinrichtung (29) derart zu schalten, dass für einen Kombinationsbetrieb (35) gleichzeitig die Energiewandlung (32) und eine Energierückspeisung (26) elektrischer Energie aus dem Gleichspannungskreis (5) in das erste Wechselspannungsnetz (6), insbesondere auf Basis einer Netzüberwachung (24) des ersten Wechselspannungsnetzes (6), durchgeführt wird.

8. Energiewandler (1) nach Anspruch 6 oder 7, wobei die Netzüberwachung (34) ausgebildet ist, charakteristische elektrische Werte des ersten Wechselspannungsnetzes (6), insbesondere Spannung und/oder Strom und/oder elektrische Leistung und/oder Frequenz, für die Netzüberwachung (24) mittels einer Erfassungsvorrichtung (25) zu erfassen.

9. Umrichter (2) mit einem Energiewandler (1) nach einem der Ansprüche 1 bis 8.

10. Umrichter (2) nach Anspruch 9, aufweisend einen Wechselrichter (30), wobei der Wechselrichter (30) mittels der ersten und der zweiten Gleichspannungsphase (15,16) des Gleichspannungszwischenkreises (5) mit dem rückspeisefähigen Gleichrichter (4) elektrisch verbunden ist.

11. Umrichter (2) nach Anspruch 10, wobei der Wechselrichter (30) mittels eines zweiten Wechselspannungsnetzes (31) mit einer elektrischen Maschine (3) elektrisch verbindbar ist.

12. Verfahren (33) eines Energiewandler (1) nach einem der Ansprüche 1 bis 8, wobei mittels der über die jeweiligen Ansteuersignale (28) der Steuereinrichtung (29) angesteuerten Leistungshalbleiterschalter (22) des ersten und zweiten Leistungshalbleitermoduls (8,9), der Spule (11) und des ersten und zweiten Kondensators (12,13) elektrische Energie bei der Energiewandlung (32) in Wärmeenergie umgewandelt wird.

13. Verfahren (33) nach Anspruch 12, wobei die Leistungshalbleiterschalter (22) des ersten und zweiten Leistungshalbleitermoduls (8,9) bei der Energiewandlung (32) mit einer Taktfrequenz ab 40 kHz betrieben werden.

14. Verfahren (33) nach einem der Ansprüche 12 oder 13, wobei die Steuereinrichtung (29) die jeweiligen Leistungshalbleiterschalter (22) des dritten und vierten Leistungshalbleitermoduls (18,19) bei der Energiewandlung (32) im Sperrbetrieb (34) mittels der jeweiligen Ansteuersignale (28) der Steuereinrichtung (29), insbesondere auf Basis einer Netzüberwachung (24) des ersten Wechselspannungsnetzes (6), sperrt.

15. Verfahren (33) nach einem der Ansprüche 12 oder 13, wobei
- der rückspeisefähige Gleichrichter (4) mit dem ersten Wechselspannungsnetz (6) elektrisch verbunden wird und
- die Steuereinrichtung (29) die jeweiligen Leistungshalbleiterschalter (22) des ersten, zweiten, dritten und vierten Leistungshalbleitermoduls (8,9,18,19) mittels der jeweiligen Ansteuersignale (28) derart ansteuert, dass im Kombinationsbetrieb (35) gleichzeitig die Energiewandlung (32) und die Energierückspeisung (26) elektrischer Energie aus dem Gleichspannungskreis (3) in das erste Wechselspannungsnetz (6), insbesondere auf Basis einer Netzüberwachung (24) des ersten Wechselspannungsnetzes (6), durchgeführt wird.
